# EUROPEAN PATENT APPLICATION

(11) **EP 4 421 203 A1**
(43) Date of publication of application: **28.08.2024**
(21) Application number: 22907911.6
(22) Date of filing: 13.12.2022
(51) Int. Cl.: C22C 38/02, C22C 38/04, C22C 38/06, C22C 38/60, C22C 38/14, C22C 38/00, C21D 8/02, B21B 1/16, C21D 5/14, C21D 9/52

(54) **CALCIUM-CONTAINING GRAPHITE STEEL WIRE ROD, GRAPHITE STEEL, AND MANUFACTURING AND CUTTING METHOD THEREFOR**

(30) Priority: 14.12.2021 KR 20210178348
(71) Applicant: POSCO Co., Ltd, Pohang-si, Gyeongsangbuk-do 37859 (KR)
(72) Inventor: CHOI, Sangwoo, Pohang-si Gyeongsangbuk-do 37664 (KR); LIM, Namsuk, Pohang-si Gyeongsangbuk-do 37669 (KR)
(74) Representative: Nederlandsch Octrooibureau
(86) International application number: PCT/KR2022/020279
(87) International publication number: WO 2023/113444

(57) **Abstract**

The present disclosure relates to a calcium-containing graphite steel wire rod, a steel wire, a graphite steel, and a manufacturing and cutting method thereof, and more particularly, to a cutting method for manufacturing industrial parts, a graphite steel wire rod, a graphite steel, and a manufacturing method therefor.

## Description

### [Technical Field]

The present disclosure relates to a calcium-containing graphite steel wire rod, a graphite steel, a manufacturing and cutting method therefor, and more particularly, to a cutting method for manufacturing industrial parts, a graphite steel wire rod, a graphite steel, and a manufacturing method therefor.

### [Background Art]

In general, free-cutting steels to which machinability-imparting elements such as Pb, Bi, and S are applied have been used as a material for mechanical components that require machinability. In order to improve machinability of steel materials, liquid metal embrittlement phenomenon may be used by adding low-melting point machinability-imparting elements such as Pb and Bi to steel, or a large amount of MnS may be formed in steel. Such free-cutting steels have excellent machinability such as surface roughness, chip controllability, and tool life during cutting.

However, Pb-added free-cutting steel having excellent machinability, is very harmful to the human body because harmful substances such as toxic fume are emitted during a cutting process and cause a problem in recycling of steel materials. Therefore, addition of S, Bi, Te, Sn, and the like is suggested for replacement thereof. However, it has been known that many problems may be caused thereby, for example, cracks easily occur while manufacturing steel materials causing considerable difficulties in production or cracks may occur during hot rolling.

Free-cutting steel developed to solve the above-described problems is graphite free-cutting steel. Graphite free-cutting steel is a steel containing fine graphite grains inside a ferrite matrix or a ferrite-pearlite matrix and having excellent machinability because the fine graphite grains contained therein serve as a crack source during cutting, thereby acting as a chip breaker.

However, despite these advantages of graphite free-cutting steel, graphite free-cutting steel is not current commercialized. When carbon is added to steel, graphite that is a stable phase precipitates as cementite that is a metastable phase, so that is difficult to precipitate graphite without a separate long-term heat treatment. During such a long-term heat treatment process, decarburization occurs, causing harmful effects adversely affecting performance of final products.

In addition, in the case where graphite grains, although precipitated by graphitization heat treatment, are non-uniformly distributed in irregular shapes, distribution of physical properties becomes non-uniform during cutting to considerably deteriorate chip controllability or surface roughness and shorten tool life, making it difficult to obtain advantages of graphite free-cutting steel. Therefore, there is a need to provide a graphite free-cutting steel wire rod in which fine graphite grains are uniformly distributed in a matrix during heat treatment with a considerably reduced heat treatment time and a cutting method to obtain excellent machinability (i.e., CNC composite lathe and spherical CAM automatic lathe).

(Related Art Document) Patent Document 1: Korean Patent Application Publication No. 10-2015-0057400

### [Disclosure]

### [Technical Problem]

The present disclosure provides a design of components of graphite steel and cutting conditions for manufacturing industrial parts, a steel wire rod for manufacturing graphite steel, a wire rod, and a manufacturing method therefor by graphitizing heat treatment.

However, the technical problems to be solved by the present disclosure are not limited to the aforementioned problems, and any other technical problems not mentioned herein will be clearly understood from the following description by those skilled in the art to which the present disclosure pertains.

### [Technical Solution]

A graphite steel wire rod according to an embodiment of the present disclosure includes, in percent by weight (wt%), 0.60 to 0.90% of carbon (C), 2.0 to 2.5% of silicon (Si), 0.7 to 1.30% of manganese (Mn), 0.20 to 0.50% of sulfur (S), 0.01 to 0.05% of aluminum (Al), 0.005 to 0.020% of titanium (Ti), 0.003 to 0.015% of nitrogen (N), 0.0001 to 0.05% of calcium (Ca), and the balance of iron (Fe) and inevitable impurities.

A method for manufacturing a graphite steel wire rod according to another embodiment of the present disclosure includes: preparing a billet including, in percent by weight (wt%), 0.60 to 0.90% of carbon (C), 2.0 to 2.5% of silicon (Si), 0.7 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities; heating the billet; hot rolling the heated billet to prepare a wire rod; and cooling the wire rod.

A graphite steel according to another embodiment of the present disclosure includes, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities, wherein in a microstructure, graphite grains are distributed in a ferrite matrix, a graphitization rate is 90% or more, and a pearlite fraction is less than 10%.

A method for manufacturing a graphite steel according to another embodiment of the present disclosure includes: preparing a wire rod including, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.0030 to 0.015% of nitrogen (N), 0.0001 to 0.05% of calcium (Ca), and the balance of iron (Fe) and inevitable impurities; and performing graphitizing heat treatment on the prepared wire rod.

A cutting method according to another embodiment of the present disclosure includes cutting the graphite steel by using one selected from a CNC composite lathe and a spherical CAM automatic lathe.

### [Advantageous Effects]

The calcium-containing free-cutting graphite steel according to the present disclosure may be applied to materials of small parts such as TV PEM nuts due to excellent machinability.

### [Best Mode]

A graphite steel wire rod according to an embodiment of the present disclosure includes, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities.

### [Modes of the Invention]

Hereinafter, preferred embodiments of the present disclosure will now be described. However, the present disclosure may be embodied in many different forms and should not be construed as being limited to the embodiments set forth herein. Rather, these embodiments are provided so that this disclosure will be thorough and complete, and will fully convey the scope of the disclosure to those skilled in the art.

The terms used herein are merely used to describe particular embodiments. Thus, an expression used in the singular encompasses the expression of the plural, unless it has a clearly different meaning in the context.

Hereinafter, the unit is wt% unless otherwise stated. In addition, it is to be understood that the terms such as "including" or "having" are intended to indicate the existence of components disclosed in the specification, and are not intended to preclude the possibility that one or more other components may exist or may be added.

Meanwhile, unless otherwise defined, all terms used herein have the same meaning as commonly understood by one of ordinary skill in the art to which this disclosure belongs. Thus, these terms should not be interpreted in an idealized or overly formal sense unless expressly so defined herein. As used herein, the singular forms are intended to include the plural forms as well, unless the context clearly indicates otherwise.

In addition, the terms "about", "substantially", etc. used throughout the specification mean that when a natural manufacturing and substance allowable error are suggested, such an allowable error corresponds a value or is similar to the value, and such values are intended for the sake of clear understanding of the present invention or to prevent an unconscious infringer from illegally using the disclosure of the present invention.

Hereinafter, the calcium-containing graphite steel wire rod having excellent machinability, a wire rod, a graphite steel, a manufacturing and cutting method therefor will be described in detail.

### [Graphite Steel Wire Rod]

A graphite steel wire rod according to an embodiment of the present disclosure may include, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities.

### Carbon (C): 0.60 to 0.90 wt%

Carbon is an essential element for forming graphite grains. If the C content is less than 0.60 wt%, the effect on improving machinability is insufficient and distribution of graphite grains is non-uniform even after graphitization is completed. On the contrary, if the C content is excessive exceeding 0.90 wt%, coarse graphite grains are formed and the aspect ratio increases, so that machinability, particularly, surface roughness, may deteriorate. Therefore, an upper limit of the C content may be controlled to 0.90 wt%.

### Silicon (Si): 2.0 to 2.5 wt%

Silicon is an essential component, as a deoxidizer, to prepare molten steel and is a graphitization-promoting element allowing carbon to precipitate into graphite by destabilizing cementite contained in steel, and thus silicon is actively added. In order to achieve this effect, the Si content may be 2.0 wt% in the present disclosure. However, if the Si content is excessive, not only the effect may be saturated, but also hardness may also increase due to sold solution strengthening effect to accelerate tool wear during cutting, embrittlement may be caused by an increase in non-metallic inclusions, and excessive decarburization may occur during hot rolling. Therefore, an upper limit of the Si content may be controlled to 2.5 wt%.

### Manganese (Mn): 0.70 to 1.30 wt%

Manganese improves strength and impact properties of steel and combines with sulfur contained in steel to form MnS inclusions, thereby contributing to improvement of machinability. In the present disclosure, the Mn content may be 0.70 wt% or more to obtain these effects. On the contrary, an excessive Mn content may inhibit graphitization to delay graphitization completion time and may increase strength and hardness to deteriorate machinability. Therefore, an upper limit of the Mn content may be 1.30 wt%.

### Sulfur (S): 0.20 to 0.50 wt%

Sulfur binds to manganese to induce production of MnS inclusions, thereby improving machinability. However, if the S content is excessive, not only graphitization of carbon in steel may be inhibited, but also S may be segregated into crystal grains to deteriorate toughness, a low-melting point emulsion may be formed to impair hot rollability, and mechanical anisotropy may appear due to MnS stretched by rolling. Therefore, in the present disclosure, it is desirable to appropriately adjust the S content to improve machinability without impairing physical properties by sulfur. Specifically, if the S content is less than 0.20 wt%, inferior machinability is obtained due to insufficient formation of inclusions such as MnS, and thus the S content need to be controlled thereabove. However, if the S content is greater than 0.50 wt%, quality defects such as surface defects may occur and the S content needs to be controlled therebelow.

### Aluminum (Al): 0.01 to 0.05 wt%

Aluminum is the second most important material for promoting graphitization after silicon. This is because aluminum, when existing as an Al solid solution, destabilizes cementite, and thus Al needs to exit as a solid solution. In the present disclosure, Al may be contained in an amount of 0.01 wt% or more to obtain such effects. On the contrary, if the Al content is excessive, not only the effects may be saturated, but also nozzle clogging may be induced during continuous casting and AlN may be formed in austenite grain boundaries, causing non-uniform distribution of graphite including AlN as nuclei in the grain boundaries. Therefore, an upper limit of the Al content may be controlled to 0.05 wt%.

### Titanium (Ti): 0.005 to 0.02 wt%

Titanium, like aluminum, combines with nitrogen to form nitrides such as TiN and AlN, and these nitrides act as nuclei for graphite formation during constant-temperature heat treatment. While AlN that is formed at a low temperature is precipitated non-uniformly after austenite is formed, TiN that is formed at a temperature higher than that of AlN is crystallized before formation of austenite is completed so as to be uniformly distributed in the austenite grain boundaries and in the grains. Therefore, graphite grains formed of TiN as nuclei are also distributed finely and uniformly. Although the Ti content may be 0.005 wt% or more to obtain these effects, addition of Ti in an amount greater than 0.02 wt% may cause consumption of carbon, which is required for forming graphite, by forming coarse carbonitrides, thereby deteriorating graphitization. Therefore, an upper limit of the Ti content may be controlled to 0.02 wt%.

### Nitrogen (N): 0.003 to 0.015 wt%

Nitrogen combines with titanium and aluminum to form TiN, AlN, and the like, and nitrides such as AlN are mainly formed in austenite grain boundaries. Because graphite is formed using such nitrides as nuclei during graphitizing heat treatment, non-uniform distribution of graphite may be caused, and therefore it is necessary to add an appropriate amount thereof. If the amount of nitrogen added is excessive, nitrogen failing to bind to a nitride-forming element and remaining as a solute increases strength and stabilizes cementite exhibiting adverse effects to delay graphitization. Therefore, a lower limit of the N content may be controlled to 0.003 wt% and an upper limit thereof may be controlled to 0.015 wt% such that nitrogen is consumed to form nitrides acting as nuclei for forming graphite and does not remain as a solute.

### Calcium (Ca): 0.0001 to 0.05 wt%

Calcium forms a Ca-Al-based oxide in steel having a composition of the present disclosure, and the Ca-Al-based oxide acts as a nucleus of graphitization to promote graphitization and also forms a Ca-based emulsion to improve machinability. The effects are insufficient in the case where the Ca content is less than 0.0001 wt%, and coarse oxide-based non-metal inclusions are produced in a large quantity in the case where the Ca content is greater than 0.050 wt%, thereby deteriorating fatigue strength of mechanical parts. Therefore, the Ca content may be controlled to a range of 0.0001 to 0.05 wt%.

### Other components

The remaining component of the composition of the present disclosure is iron (Fe). However, the composition may include unintended impurities inevitably incorporated from raw materials or surrounding environments during common manufacturing processes. However, in the present disclosure, phosphorus (P), boron (B), and oxygen (O) may not be substantially included. The impurities are not specifically mentioned in the present disclosure, as they are known to any person skilled in the art.

### Microstructure

In addition, in the graphite steel wire rod according to another embodiment of the present disclosure, an area fraction of pearlite may be 90% or more and an area fraction of ferrite may be less than 10%, and preferably, an area fraction of pearlite may be 95% or more and an area fraction of ferrite may be less than 5%. In the present disclosure, graphite grains are produced as pearlite is degraded. Thus, as the area fraction of pearlite decreases, the area fraction of graphite grains decreases and the graphite grains are not uniformly distributed. An upper limit of the area fraction of pearlite is not limited because a high area fraction of pearlite is advantageous to obtain uniform and fine graphite grains.

All of the descriptions given above with reference to the graphite steel wire rod may be applied to a method for manufacturing a graphite steel wire rod, a graphite steel, a method for manufacturing the graphite steel, and a cutting method to be described below. Although duplicate descriptions may be omitted, the omitted descriptions may also be applied thereto in the same manner.

### [Method for Manufacturing Graphite Steel Wire Rod]

A method for manufacturing a graphite steel wire rod according to another embodiment of the present disclosure includes: preparing a billet including, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities; heating the billet; hot rolling the heated billet to prepare a wire rod; and cooling the wire rod.

### Heating Process

In addition, according to an embodiment of the present disclosure, the heating process may include heat treatment in a temperature range of 1050±100°C for 60 minutes of more.

Before hot-rolling the billet, the billet is maintained in a temperature range of 1050±100°C for 60 minutes or more. A heating temperature of the billet lower than 950°C is not preferable, because a load may increase during rolling, resulting in a decrease in rolling productivity. A heating temperature higher than 1150°C is not preferable, because costs may increase and decarburization may also be accelerated, so that a decarburized layer becomes thicker and remains in final products. The heating was maintained for 60 minutes or more because it is difficult to obtain uniform distribution of temperature in and out of the billet for rolling of the wire rod in the case where the heating time is less than 60 minutes.

### Rolling Process

In addition, according to an embodiment of the present disclosure, the hot rolling of the heated billet to prepare a wire rod may include hot rolling the billet in a temperature range of 900 to 1150°C.

The rolling temperature of the wire rod may be controlled in the range of 900 to 1150°C because surface defects easily occurs or a rolling load increases at a temperature lower than 900°C during hot rolling making rolling difficult, and austenite grain size (AGS) increases at a temperature higher than 1150°C so that graphitizing heat treatment time increases after hot rolling the wire rod.

### Cooling Process

In addition, according to an embodiment of the present disclosure, the cooling process may include cooling the wire rod to 500°C at a cooling rate of 0.1 to 10.0°C/s, specifically, cooling the wire rod to 500°C in a temperature range of 750 to 900°C at a cooling rate of 0.1 to 10.0°C/s.

Also, according to an embodiment of the present disclosure, the method may further include an air cooling process after the cooling process.

A cooling rate exceeding 10.0°C/s is not preferable, because a hard phase such as martensite may be formed, resulting in wire breakage during cold drawing, which is a process following the rolling of the wire rod. A cooling rate less than 0.1°C/s is not preferable, because proeutectoid may be excessively formed to decrease a fraction of pearlite or crystal grains may coarsen resulting in non-uniform distribution of graphite grains that are formed after graphitizing heat treatment.

### [Graphite Steel]

A graphite steel according to an embodiment of the present disclosure includes, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.020% of titanium (Ti), 0.003 to 0.015% of nitrogen (N), 0.0001 to 0.05% of calcium (Ca), and the balance of iron (Fe) and inevitable impurities, wherein in a microstructure, graphite grains are distributed in a ferrite matrix, a pearlite fraction is less than 10%, and a graphitization rate is 90% or more.

The graphite steel according to an embodiment of the present disclosure may have a graphitization rate of 99% or more, more preferably 100%.

Meanwhile, the graphitization rate refers to a ratio of an amount of carbon existing as the graphite state to an amount of carbon added to steel and is defined by the following Equation 1 below.Graphitization rate (%) = (1-amount of C in undegraded pearlite/amount of C in steel) × 100

(Here, the graphitization rate is 100% in the case where there is no undegraded pearlite)

A graphitization rate of 90% or more indicates that most carbon added to the steel is consumed to form graphite and the graphite steel has a microstructure in which graphite grains are distributed in a ferrite matrix in which undegraded pearlite does not exist. In this regard, amounts of carbon as solid solutions contained in ferrite and in fine carbides are extremely small and thus not considered.

### [Method for Manufacturing Graphite Steel]

A method for manufacturing a graphite steel according to another embodiment of the present disclosure includes: preparing a wire rod including, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities; and performing graphitizing heat treatment on the prepared wire rod.

In addition, according to an embodiment of the present disclosure, the graphitizing heat treatment may include heat treatment in a temperature range of 700 to 800°C for 5 hours or more, preferably, for 5 hours to 20 hours.

If the wire rod is heat-treated in a temperature range of 700 to 800°C for 5 hours or more, the graphitization rate may reach 90% or more. At a temperature lower than 700°C, graphitizing heat treatment time increases to exceed 20 hours. A temperature higher than 800°C is not preferable, because graphitizing heat treatment time increases.

### [Cutting Method]

A cutting process according to an embodiment of the present disclosure is performed by cutting the graphite steel according to the present disclosure by using one selected from a CNC composite lathe and a spherical CAM automatic lathe.

In addition, according to an embodiment, the CNC composite lathe may have a cutting speed of 1500 RPM or more and a feed speed of 0.03 mm/rev or more, and the spherical CAM automatic lathe may also have a cutting speed of 1500 RPM or more and a feed speed of 0.03 mm/rev or more.

The graphite free-cutting steel wire rod prepared as described above may be cut in a steel cutting company to manufacture small industrial parts such as TV PEM nuts. Products with machinability inferior to that of normal free-cutting steels will not be able to enter the market. In order to overcome this, the present disclosure provides a manufacturing method by a cutting process under the conditions that the CNC composite lathe and/or the spherical CAM automatic lathe have a cutting speed of 1500 RPM or more and a feed speed of 0.03 mm/rev or more. If the CNC composite lathe and/or the spherical CAM automatic lathe have a cutting speed less than 1500 RPM and/or a feed speed less than 0.03mm/rev, machinability may deteriorate. As the cutting speed and the feed speed increase, machinability may be improved to a level equivalent to that of normal free-cutting steels.

Hereinafter, the present disclosure will be described in more detail with reference to the following examples.

These embodiments are provided to fully convey the scope of the disclosure to those skilled in the art. The present disclosure may, however, be embodied in many different forms and should not be construed as limited to the exemplary embodiments set forth herein.

### Examples

Billets having compositions shown Table 1 below were maintained at a heating temperature of 1050°C for 90 minutes and rolled at a high speed to prepare wire rods of Examples 1 to 11 and Comparative Examples 1 to 7 having a diameter of 19 mm.

**[Table 1]**

| Category | Composition of alloying elements (wt%) | | | | | | | |
|---|---|---|---|---|---|---|---|---|
| | C | Si | Mn | S | Al | Ti | N | Ca |
| Example 1 | 0.67 | 2.1 | 0.85 | 0.31 | 0.015 | 0.015 | 0.005 | 0.01 |
| Example 2 | 0.85 | 2.15 | 0.96 | 0.24 | 0.023 | 0.017 | 0.008 | 0.02 |
| Example 3 | 0.72 | 2.35 | 1.07 | 0.35 | 0.043 | 0.007 | 0.010 | 0.015 |
| Example 4 | 0.68 | 2.18 | 1.16 | 0.45 | 0.035 | 0.009 | 0.009 | 0.03 |
| Example 5 | 0.82 | 2.25 | 0.95 | 0.35 | 0.040 | 0.012 | 0.014 | 0.04 |
| Example 6 | 0.62 | 2.48 | 0.80 | 0.25 | 0.042 | 0.006 | 0.012 | 0.045 |
| Example 7 | 0.73 | 2.42 | 1.2 | 0.30 | 0.034 | 0.011 | 0.006 | 0.035 |
| Example 8 | 0.78 | 2.32 | 1.25 | 0.43 | 0.019 | 0.016 | 0.008 | 0.03 |
| Example 9 | 0.85 | 2.15 | 0.95 | 0.27 | 0.027 | 0.009 | 0.013 | 0.025 |
| Example 10 | 0.75 | 2.26 | 1.15 | 0.26 | 0.030 | 0.018 | 0.007 | 0.015 |
| Example 11 | 0.73 | 2.46 | 1.20 | 0.42 | 0.020 | 0.008 | 0.008 | 0.035 |
| Comparative Example 1 | 0.63 | 2.0 | 1.35 | 0.05 | 0.005 | 0.016 | 0.001 | 0.06 |
| Comparative Example 2 | 0.68 | 2.2 | 1.41 | 0.13 | 0.006 | 0.02 | 0.002 | 0.065 |
| Comparative Example 3 | 0.73 | 2.25 | 1.50 | 0.56 | 0.075 | 0.009 | 0.018 | 0.08 |
| Comparative Example 4 | 0.95 | 2.15 | 0.40 | 0.11 | 0.060 | 0.018 | 0.020 | 0.07 |
| Comparative Example 5 | 0.55 | 2.6 | 0.56 | 0.60 | 0.003 | 0.025 | 0.025 | 0.1 |
| Comparative Example 6 | 0.8 | 2.75 | 0.65 | 0.15 | 0.065 | 0.03 | 0.021 | 0.085 |
| Comparative Example 7 | 0.75 | 2.8 | 0.60 | 0.10 | 0.06 | 0.002 | 0.022 | 0.07 |

In addition, after preparing the wire rod by rolling and cooling, the area fraction of pearlite in the microstructure was measured, and cooling start temperature, cooling rate, and pearlite area fraction in this case are shown in Table 2 below.

Also, the prepared wire rod was subjected to graphitizing heat treatment, and graphitization heat treatment time and graphitization rate were measured and shown in Table 2 below. Graphitizing heat treatment was performed by constantly applying "temperature - 50°C" as a graphitizing heat treatment temperature.

**[Table 2]**

| Category | Wire rod | | | Graphitization | |
|---|---|---|---|---|---|
| | Cooling start temperature (°C) | Cooling rate (°C/s) | Area fraction of Pearlite (%) | Time (hr) | Graphitization rate (%) |
| Example 1 | 885 | 0.5 | 96.1 | 6.0 | 100 |
| Example 2 | 865 | 7.5 | 97.5 | 9.5 | 100 |
| Example 3 | 840 | 1.5 | 95.1 | 11.0 | 100 |
| Example 4 | 760 | 3.0 | 95.5 | 6.5 | 100 |
| Example 5 | 780 | 5.0 | 98.5 | 13.5 | 100 |
| Example 6 | 845 | 2.0 | 96.5 | 5.5 | 100 |
| Example 7 | 800 | 9.5 | 97.5 | 16.5 | 100 |
| Example 8 | 775 | 4.5 | 97.0 | 8.2 | 100 |
| Example 9 | 890 | 6.0 | 96.5 | 18.5 | 100 |
| Example 10 | 780 | 5.0 | 98.0 | 5.7 | 100 |
| Example 11 | 830 | 6.5 | 99.0 | 12.5 | 100 |
| Comparative Example 1 | 910 | 0.05 | 93.0 | 1.0 | 75 |
| Comparative Example 2 | 860 | 13.0 | 93.5 | 2.5 | 80 |
| Comparative Example 3 | 805 | 11.5 | 94.2 | 3.0 | 86 |
| Comparative Example 4 | 740 | 0.07 | 93.2 | 1.5 | 75 |
| Comparative Example 5 | 885 | 0.04 | 93.5 | 4.5 | 86 |
| Comparative Example 6 | 830 | 14.0 | 94.1 | 4.0 | 84 |
| Comparative Example 7 | 850 | 16.0 | 93.5 | 3.5 | 85 |

In Table 2, a (100%-graphitization rate) structure consists of MnS inclusions, pearlite, and some common inclusions, and a graphitized structure consists of ferrite and graphite grains.

It was confirmed that the area fraction of pearlite and graphitization rate may be achieved under the manufacturing conditions of the wire rod and graphitization as shown in Table 2.

In addition, Tables 3 and 4 show results of examples and comparative examples under different cutting conditions to manufacture parts for TV PEM nuts. Table 3 shows CNC lathe processing conditions, and Table 4 shows spherical lathe processing conditions.

**[Table 3]**

| | Cutting speed (RPM) | Feed speed(mm/rev) | Machinability (%) |
|---|---|---|---|
| Example 1 | 1,500 | 0.045 | 100 |
| Example 2 | 2,000 | 0.1 | 100 |
| Example 3 | 2,050 | 0.05 | 100 |
| Example 4 | 1,800 | 0.25 | 100 |
| Example 5 | 4,000 | 0.15 | 100 |
| Example 6 | 3,500 | 0.3 | 100 |
| Example 7 | 2,700 | 0.35 | 100 |
| Example 8 | 1,600 | 0.035 | 100 |
| Example 9 | 2,000 | 0.05 | 100 |
| Example 10 | 2,300 | 0.09 | 100 |
| Example 11 | 3,200 | 0.1 | 100 |
| Comparative Example 1 | 950 | 0.02 | 81 |
| Comparative Example 2 | 1,000 | 0.02 | 84 |
| Comparative Example 3 | 1,350 | 0.025 | 91 |
| Comparative Example 4 | 1,400 | 0.015 | 94.5 |
| Comparative Example 5 | 1,150 | 0.012 | 90 |
| Comparative Example 6 | 1,200 | 0.01 | 93 |
| Comparative Example 7 | 950 | 0.01 | 85 |

**[Table 4]**

| | Cutting speed (RPM) | Feed speed (mm/rev) | Machinability (%) |
|---|---|---|---|
| Example 1 | 1,050 | 0.045 | 100 |
| Example 2 | 2,000 | 0.1 | 100 |
| Example 3 | 2,100 | 0.05 | 100 |
| Example 4 | 1,900 | 0.25 | 100 |
| Example 5 | 2,500 | 0.15 | 100 |
| Example 6 | 3,500 | 0.3 | 100 |
| Example 7 | 2,700 | 0.35 | 100 |
| Example 8 | 3,600 | 0.035 | 100 |
| Example 9 | 2,000 | 0.05 | 100 |
| Example 10 | 2,300 | 0.09 | 100 |
| Example 11 | 3,200 | 0.1 | 100 |
| Comparative Example 1 | 950 | 0.02 | 81 |
| Comparative Example 2 | 1,000 | 0.02 | 84 |
| Comparative Example 3 | 1,350 | 0.025 | 91 |
| Comparative Example 4 | 1,400 | 0.015 | 94.5 |
| Comparative Example 5 | 1,150 | 0.012 | 90 |
| Comparative Example 6 | 1,200 | 0.01 | 93 |
| Comparative Example 7 | 950 | 0.01 | 85 |

In Tables 3 and 4, machinability refers to values obtained using machinability of common free-cutting steels as a standard (100% refers to an equivalent level).

Hereinafter, the examples and comparative examples will be evaluated with reference to Tables 1 to 4.

It was confirmed that the graphite steel wire rods according to Examples 1 to 11 had pearlite area fractions of 95.1% or more and graphitization rates of 100%, because the composition range of alloying elements and the cooling rate of 0.1 to 10°C/s according to the present disclosure were satisfied. On the contrary, it was confirmed that the graphite steel wire rods according to Comparative Examples 1 to 7 had pearlite area fractions of only 93.0 to 94.2% and graphitization rates of only 75 to 86%, because the cooling rate was out of the range of 0.1 to 10°C/s.

In addition, the materials of Examples 1 to 11, in which the CNC composite lathe and the spherical CAM automatic lathe satisfied the conditions of a cutting speed of 1500 RPM or more and a feed speed of 0.05 mm/rev or more, were evaluated to have machinability at a level equivalent to that of common free-cutting steels (100% relative to common free-cutting steels) by the cutting process. It was confirmed that Comparative Examples 1 to 7, in which the conditions of the cutting speed and the feed speed were not satisfied, exhibited 81 to 94.5% of machinability of that of common free-cutting steels.

While the present disclosure has been particularly described with reference to exemplary embodiments, it should be understood by those of skilled in the art that various changes in form and details may be made without departing from the spirit and scope of the present disclosure.

### [Industrial Applicability]

According to the present disclosure, a graphite steel wire rod applicable as a material of small parts such as TV PEM nuts due to excellent machinability without generating fume, a graphite steel, and a manufacturing method therefor may be provided, and thus the present disclosure has industrial applicability.

## Claims

1. A calcium-containing graphite steel wire rod comprising, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.020% of titanium (Ti), 0.003 to 0.015% of nitrogen (N), 0.0001 to 0.05% of calcium (Ca), and the balance of iron (Fe) and inevitable impurities.

2. The calcium-containing graphite steel wire rod according to claim 1, wherein an area fraction of pearlite is 95% or more.

3. A method for manufacturing a calcium-containing graphite steel wire rod, the method comprising:
preparing a billet including, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities;
heating the billet;
hot rolling the heated billet to prepare a wire rod; and
cooling the wire rod.

4. The method according to claim 3, wherein the heating comprises performing heat treatment in a temperature range of 1050±100°C for 60 minutes or more.

5. The method according to claim 3, wherein the hot rolling of the billet to prepare a wire rod comprises hot rolling performed in a temperature range of 900°C to 1150°C.

6. The method according to claim 3, wherein the cooling comprises cooling the wire rod to 500°C at a cooling rate of 0. 1°C/s to 10.0°C/s.

7. The method according to claim 3, further comprising air cooling after the cooling.

8. A calcium-containing graphite steel comprising, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities,
wherein in a microstructure, graphite grains are distributed in a ferrite matrix, a graphitization rate is 90% or more, and a pearlite fraction is less than 10%.

9. The calcium-containing graphite steel according to claim 8, wherein the graphitization rate is 99% or more.

10. A method for manufacturing a calcium-containing graphite steel, the method comprising:
preparing a wire rod including, in percent by weight (wt%), 0.60 to 0.90% of carbon (C), 2.0 to 2.5% of silicon (Si), 0.70 to 1.30% of manganese (Mn), 0.20 to 0.50% of sulfur (S), 0.01 to 0.05% of aluminum (Al), 0.005 to 0.02% of titanium (Ti), 0.003 to 0.015% of nitrogen (N), 0.0001 to 0.05% of calcium (Ca), and the balance of iron (Fe) and inevitable impurities; and
performing graphitizing heat treatment on the prepared wire rod.

11. The method according to claim 10, wherein the graphitizing heat treatment comprises heat treatment in a temperature range of 700°C to 800°C for 5 hours or more.

12. A method for cutting the calcium-containing graphite steel according to claim 8 by using one selected from a CNC composite lathe and a spherical CAM automatic lathe.

13. The method according to claim 12, wherein the CNC composite lathe has a cutting speed of 1500 RPM or more and a feed speed of 0.03 mm/rev or more.

14. The method according to claim 12, wherein the spherical CAM automatic lathe has a cutting speed of 1500 RPM or more and a feed speed of 0.03 mm/rev or more.
